# EUROPÄISCHE PATENTANMELDUNG

(11) **EP 3 181 384 A1**
(43) Veröffentlichungstag der Anmeldung: **21.06.2017**
(21) Anmeldenummer: 16002070.7
(22) Anmeldetag: 26.09.2016
(51) Int. Cl.: B60G 17/005, B62D 61/12

(54) **VORRICHTUNG ZUM ANHEBEN EINER FAHRZEUGACHSE**

(30) Priorität: 15.12.2015 DE 102015016190
(71) Anmelder: Michalke, Günter, 37085 Göttingen (DE)
(72) Erfinder: Michalke, Günter, 37085 Göttingen (DE)
(74) Vertreter: Köhler, Tobias

(57) **Zusammenfassung**

Die Erfindung betrifft eine Vorrichtung zum Anheben von Achsen von LKW-Anhängern, Sattelaufliegern und ähnlichen Fahrzeugen, aufweisend einen Fahrgestelllängsträger (A), Achsen (B) und einem zwischen diesen als Federelement angeordneten Luftbalg (C), wobei der Luftbalg (C) an das zentrale Pneumatiksystem des Fahrzeuges angeschlossen ist, welches den Luftdruck im Luftbalg (C) steuert, bestehend aus einem Träger (1), einer an seinem Ende angeordneten oberen Aufhängung (2) sowie einer an seinem unteren Ende angeordneten unteren Aufnahmeplatte (3), welche parallel zu der Längsachse des Trägers (1) angeordnet ist und in Fahrtrichtung hinter dem Rad der jeweils anzuhebenden Achse (B) angeordnet ist, wobei die erfindungsgemäße Vorrichtung hinter dem Luftbalg (C) des Rades mit der oberen Aufhängung (2) an dem Fahrgestelllängsträger (A) bzw. dem Federbock (D) lösbar oder nichtlösbar so angeordnet ist, dass der Träger (1) so weit an den Luftbalg (C) des jeweiligen Rades herangeführt wird, dass die untere Aufnahmeplatte (3), welche so ausgeführt ist, dass sie mit ihrem der Achse (B) zugewandten Ende unter den den Luftbalg (C) tragenden Bereich der Feder (D) der Achse (B) des jeweiligen Rades greift und durch eine geeignete technische Lösung am Längsträger (A) fixiert ist, wobei das andere Ende der unteren Aufnahmeplatte (3) ebenfalls aus dem Träger (1) heraus ragt und als Tragarm (8) ausgeführt ist und so im Träger (1) fixiert ist, dass im Bereich des Trägers (1) ein Drehpunkt (10) gebildet ist, um welchen sich die untere Aufnahmeplatte (3) horizontal schwenken lässt und auf diesem unteren Tragarm (8), dem der Achse (B) abgewandten Ende des Trägers (1), ein an das zentrale Pneumatiksystem des Fahrzeuges angeschlossener Hubbalg (7) angeordnet ist, welcher sich mit seinem oberen Ende mittels eines oberen Tragarms (9) abstützt und mit dem pneumatischen Drucksystem des Fahrzeuges verbunden ist, wobei sich dieser obere Tragarm (9) dabei am Träger (1) abstützt.

## Beschreibung

Die Erfindung betrifft eine Vorrichtung zum Anheben einer Fahrzeugachse.

Es ist bekannt, bei Lkw oder Sattelaufliegern eine Achse als Liftachse auszuführen. Damit wird erreicht, dass diese nicht ständig auf der Fahrbahn mitläuft, sondern bei geringer Belastung des Fahrzeuges in die Höhe gehoben werden kann.

Da sich im gehobenen Zustand die Räder der jeweiligen nicht mit drehen wird der Reifenverschleiß vermindert und es wird eine Kraftstoffeinsparung durch verminderte Lager- und Reifenreibung erreicht.

Ebenfalls können Mautkosten minimiert werden, da verschiedene Tarife nach Anzahl der Achsen berechnet werden.

Darüber hinaus kann eine Liftachse auch als Anfahrhilfe, z. B. auf verschneiter Fahrbahn, benutzt werden indem der Achsdruck der benachbarten Antriebsachse durch Anheben der Liftachse zum Anfahren erhöht wird.

Bekannt sind solche Achsanhebevorrichtungen beispielsweise aus der DE3309729 A1. Diese beschreibt eine Achsanhebevorrichtung für eine luftgefederte Achse mit einem den Achskörper untergreifenden Hebel und einem Hubbalg, bei welcher ein L-förmig ausgebildeter Hebel (7) mit seinem langen Schenkel unter dem Hubbalg (8) an einem, diesen übergreifenden Bügel (11) gelagert und sein kurzer Schenkel (14) mit einem Schwenkzylinder (9) unter den Achskörper (15) schwenkbar ist.

Ebenfalls bekannt ist eine Achsanhebevorrichtung für luftgefederte Achsen (3) von Lastkraftwagen aus der EP 332037 A2 mit einem Hubbalg (7), der einen Ends am Fahrzeugrahmen abgestützt ist und anderen Ends mit der Achse (3) zusammenwirkt soll in die meisten Fahrzeugrahmen eingebaut werden können, insbesondere wenn die Achse (3) unterhalb einer Kardanwelle angeordnet ist. Hierzu weist die Achse (3) mindestens einen starren mit ihr verbundenen und in Fahrzeuglängsrichtung von der Achse (3) abstehenden Halter (13) auf, gegen dessen der Fahrbahn zugewandte Unterseite der Hubbalg (7) zum Anheben der Achse (3) drückbar ist.

Eine Befestigungsvorrichtung für ein Anhebemittel (4) zum Anheben von Rollachsen von Nutzfahrzeugen, Anhängern und Sattelaufliegern wird beschrieben in der EP1332953, wobei dieses Anhebemittel (4) geeignet ist, auf den mit der anzuhebenden Rollachse verbundenen Blattfederarm (3) einzuwirken, wobei der besagte Blattfederarm (3) auf dem Träger (1) der pneumatischen Aufhängung schwenkbar montiert ist, in Zusammenarbeit mit einem transversalen Stift (2), wobei die besagte Befestigungsvorrichtung einen Träger (5) für das Anhebemittel (4) umfasst, welches zwei nach oben gerichtete Seitenarme (6) inkorporiert, die an ihrem freien Ende jeweils mit einem Bogen in der Form eines Hakens (7) abgeschlossen sind, wobei die Haken (7) von der Art sind, welche die Verbindung dieser Haken mit den überstehenden Teilen gestatten, die von dem Träger (1) der pneumatischen Aufhängung in der Weise abstehen, dass das Anhebemittel mit dem Träger (1) der pneumatischen Aufhängung verbunden werden kann, indem es einfach an die besagten überstehenden Teile gehangen wird.

In DE 60003694 wird eine Achsen/Aufhängungsanordnung mit einem Aufhängungsträger zur lagernden Anbringung einer Achse an der Unterseite eines Fahrzeugs und einer Achsenhebeanordnung beschrieben, die ein Krafterzeugungsmittel umfasst, das betätigt werden kann, um eine Kraft zum Anheben des Aufhängungsträgers zu erzeugen, dadurch gekennzeichnet, dass das Krafterzeugungsmittel angrenzend an und unterhalb des Trägers angeordnet ist und im Wesentlichen horizontal auf eine Auflage wirkt, die vom Träger nach unten vorragt, um den Träger anzuheben, wobei ein Freiraum unterhalb des Trägers auf der anderen Seite der nach unten vorragenden Auflage die Anordnung einer Bremskammer mit Fahr/Park-Doppelfunktion ebenfalls angrenzend und unterhalb des Trägers ermöglicht.

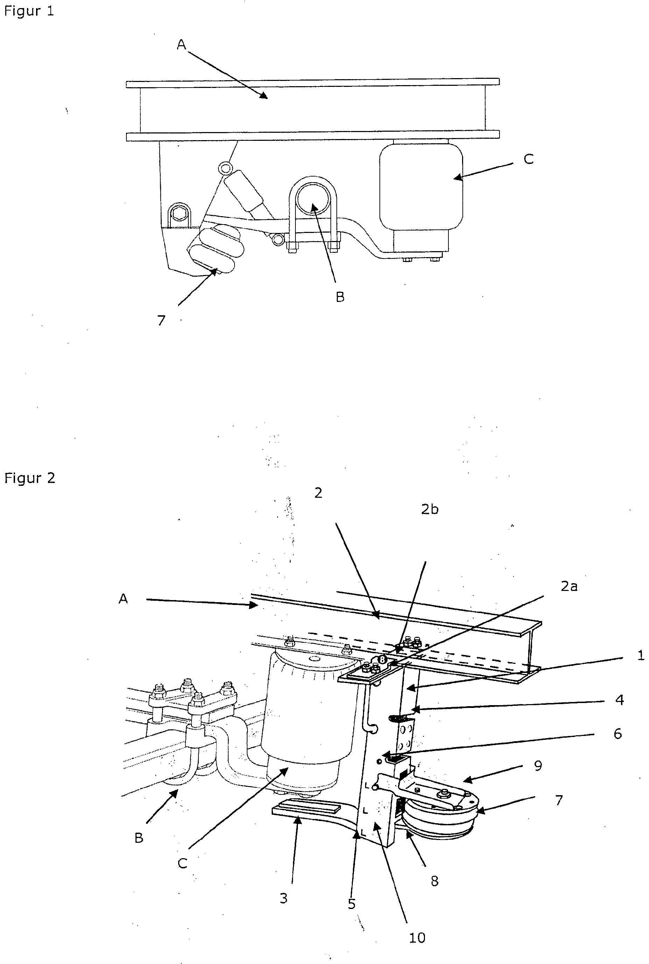

Nachteilig bei allen diesen Varianten von Liftachsen ist die statische Ausführung, da die Hebelwirkung zum Anheben des Rades einen sehr langen Hebel aufweist und deshalb eine schlechte Kraftwirkung erzeugt.
Dies wird dadurch verursacht, dass der Anlenkpunkt 10 des Hebelsystems und der Punkt der Krafteinwirkung auf die Achse B auf verschiedenen Seiten des Rades angeordnet sind.
Diese sich ungünstig für die aufzuwendende Hubkraft wird in Figur 1 dargestellt.
Der Hubbalg ist gemäß des Standes der Technik in Fahrtrichtung vor dem Rad angeordnet und es wird mit diesem das gesamte Achssystem angehoben.

Der Erfindung liegt die Aufgabe zugrunde, eine Vorrichtung vorzuschlagen, welche die bestehenden Nachteile des Standes der Technik behebt und vergleichsweise geringe Kosten verursacht und dadurch finanzielle Anschaffungshindernisse bei den Fuhrunternehmern überwindet.

Erfindungsgemäß wird diese Aufgabe durch eine Vorrichtung gemäß der Patentansprüche 1 bis 7 gelöst.
Nachfolgend soll diese Vorrichtung anhand der Abbildungen 1 bis 4 und dem Ausführungsbeispiel näher erläutert werden.

Dabei zeigt Figur 1 ein Prinzip der Achsanhebung gemäß des Standes der Technik. Figur 2 zeigt die erfindungsgemäße Vorrichtung in Ruhezustand und Figur 3 zeigt die erfindungsgemäße Vorrichtung in aktivem Zustand.

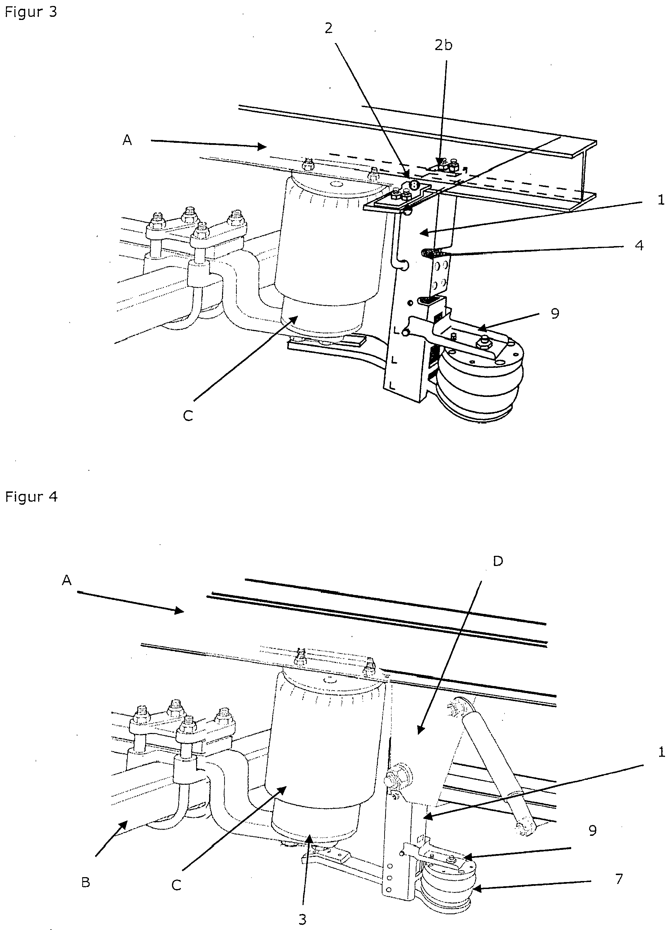

In Figur 4 wird die erfindungsgemäße Vorrichtung montiert an einen Federbock D gezeigt.

Die erfindungsgemäße Vorrichtung besteht aus einem Träger 1, einer an seinem Ende angeordneten oberen Aufhängung 2 sowie einer an seinem unteren Ende angeordneten unteren Aufnahmeplatte 3, welche parallel zu der Längsachse des Trägers 1 angeordnet ist und wird in Fahrtrichtung hinter dem Rad der jeweils anzuhebenden Achse B angeordnet.

Die erfindungsgemäße Vorrichtung wird hinter dem Luftbalg C des Rades mit der oberen Aufhängung 2 an dem Fahrgestelllängsträger A so eingehängt, dass der Träger 1 so weit an dem Luftbalg C des jeweiligen Rades herangeführt wird, dass die untere Aufnahmeplatte 3, welche so ausgeführt ist, dass sie mit ihrem der Achse B zugewandten Ende unter den den Luftbalg C tragenden Bereich der Feder D der Achse B des jeweiligen Rades greift.

In dieser Lage wird die erfindungsgemäße Vorrichtung durch eine geeignete technische Lösung am Längsträger A fixiert.
Diese Befestigung kann lösbar, wie beispielsweise in den Figuren 2 und 3 gezeigt, ausgeführt werden oder die Vorrichtung wird nicht lösbar am Längsträger A fixiert. Beispielsweise ist dies mittels Verschweißens der erfindungsgemäßen Vorrichtung mit dem Längsträger A denkbar.

In weiterer Ausführungsvariante ist es auch denkbar, die erfindungsgemäße Vorrichtung in Fahrtrichtung hinter dem Rad an dem dort befindlichen Federbock D anzuordnen.

Das andere Ende der unteren Aufnahmeplatte 3 ragt ebenfalls aus dem Träger 1 heraus und ist als Tragarm 8 ausgeführt.

Die untere Aufnahmeplatte 3 ist dabei so im Träger 1 fixiert, dass im Bereich des Trägers 1 ein Drehpunkt 10 angeordnet ist, um welchen sich die unteren Aufnahmeplatte 3 horizontal schwenken lässt.
Auf diesem unteren Tragarm 8, dem der Achse B abgewandten Ende des Trägers 1, ist ein Hubbalg 7 angeordnet, welcher sich mit seinem oberen Ende mittels eines oberen Tragarms 9 abstützt und mit dem Pneumatischen Drucksystem des Fahrzeuges verbunden ist.
Dieser obere Tragarm 9 stützt sich dabei in einer Höhenverstellung 4 des Trägers 1 ab.

Soll nun die Achse B des Fahrzeuges angehoben werden, so wird der Druck vom Luftbalg C der Fahrzeugfederung gelassen und der Hubbalg 7 mit Druckluft beaufschlagt.
Dabei wird der untere Tragarm 8 nach unten gedrückt und über den Drehpunkt 10 wird diese Bewegung in eine Aufwärtsbewegung des anderen Endes des unteren Tragarms 8 umgewandelt.
Somit wird der Hubbalg C zusammengepresst und die Achse B wird so weit angehoben, dass ihre Räder nicht mehr mitlaufen.

Nunmehr ist eine Weiterfahrt mit angehobener Achse möglich. Bei entsprechender Ladung ist es sogar möglich mit dem Fahrzeug längere Strecken mit gehobener Achse zurückzulegen.

Nachfolgend soll die erfindungsgemäße Vorrichtung anhand von Ausführungsbeispielen näher erläutert werden.

Der Träger 1 ist vorzugsweise u-förmig ausgeführt, wobei die offene Seite des U-Profils dem Luftbalg C zugewandt ist.
Der Träger 1 entspricht, wie vorstehend schon beschrieben, in seiner Länge in etwa der Höhe des Luftbalges C in leerem, zusammengepressten Zustand.

Da in den unterschiedlichen Fahrzeugtypen entsprechend den jeweiligen Anforderungen auch verschiedene Pneumatiksysteme mit verschieden großen Luftbälgen C zur Anwendung kommen, wird vorgeschlagen, die erfindungsgemäße Vorrichtung in ihrer Dimension so zu gestalten, dass sie bei verschieden großen Luftbälgen C eingesetzt werden kann.

Dies kann beispielsweise dadurch realisiert werden, dass die untere Aufnahmeplatte 3 in verschiedenen Positionen am Träger 1 angeordnet werden kann, mit welchen die Höhe der Vorrichtung einzustellen ist.

Vorzugseise kann dies dadurch realisiert werden, dass die Aufnahmeplatte 3 mit dem Träger 1 nicht fest verbunden ist, sondern mit ihrer dem Träger 1 zugewandten Seite in die offene Seite des U-Profils des Trägers 1 eingeführt und in einen in seiner Form dem Profil der unteren Aufnahmeplatte 3 entsprechenden Durchbruch zur Höhenverstellung 4 in der Rückwand des U-Profils 1a eingesetzt wird.
An der offenen Seite des U-Profils 1a des Trägers 1 sind Auflagen 5 für die untere Aufnahmeplatte 3 angeordnet.

Diese Auflagen 5 sind dabei so angeordnet, dass die untere Aufnahmeplatte 3, wenn die erfindungsgemäße Vorrichtung am Fahrgestelllängsträger A eingehangen ist, parallel zu diesem liegt.

Das andere Ende der unteren Aufnahmeplatte 3 ragt ebenfalls aus dem Träger 1 heraus und ist als Tragarm 8 ausgeführt.

Die untere Aufnahmeplatte 3 ist dabei so im Träger 1 fixiert, dass im Bereich des Trägers 1 ein Drehpunkt 10 angeordnet ist, um welchen sich die unteren Aufnahmeplatte 3 horizontal schwenken lässt.

Bei Verwendung der erfindungsgemäßen Vorrichtung für verschiedene Fahrzeugtypen sind in den Träger 1 in entsprechenden Abständen über die Länge des Trägers 1 verteilt mehrere Kombinationen von Durchbrüchen zur Höhenverstellung 4 sowie entsprechend beabstandeten Auflagen 5 einzubringen.

Zur weiteren Sicherung der Lage der unteren Aufnahmeplatte 3 im Träger können Fixierungen 6 angeordnet werden. Diese sind gemäß der erfindungsgemäßen Lösung bei eingesetzten unteren Aufnahmeplatten 3 zwischen dem Durchbruch zur Höhenverstellung 4 und der Auflage 5 oberhalb der unteren Aufnahmeplatte 3 anzuordnen. In besonderer Ausgestaltung der erfindungsgemäßen Lösung können hierzu beispielsweise Bohrungen in die Seitenwände des U-Profiles eingebracht werden, durch welche dann Schrauben geführt und mit Muttern gesichert werden.

Die obere Aufhängung 2 ist so gestaltet, dass sie an dem Fahrgestelllängsträger A eingehängt werden kann.

Üblicherweise sind die Fahrgestelllängsträger A aus Doppel-T-Profilen gefertigt. Die obere Aufhängung 2 ist deshalb vorzugsweise so gestaltet, dass sie mit einem Ende 2a formschlüssig eine Seite des unteren Schenkels des Doppel-T-Profilen umgreift und die andere Seite mittels einer in Richtung des Profils verschiebbaren Klemmeinrichtung 2b, welche vorzugsweise ebenfalls formschlüssig die andere Seite des unteren Schenkels des Doppel-T-Profils umgreift und lösbar in dieser Lage zu fixieren ist.

Hierzu sind alle sinnvoll einsetzbaren bekannten Klemmmöglichen denkbar, bevorzugt wird allerdings ein Fixieren mittels Klemmschrauben 2c wie in der Abbildung 1 beispielhaft dargestellt

Eine einfachere Ausführungsform ist einsetzbar, wenn die erfindungsgemäße Vorrichtung für nur eine Fahrzeugtype Verwendung finden soll.
Für diese Verwendung ist nur eine Lage der unteren Aufnahmeplatte 3 erforderlich. Dem folgend kann diese Aufnahmeplatte 3 deshalb in der erforderlichen Lage fixiert angeordnet werden.

Vorteilhafterweise ist es mit der erfindungsgemäßen Vorrichtung möglich, diese als Stabilisator für den Fahrzeugaufbau zu verwenden. Bekanntermaßen neigt sich dieser in Kurven immer nach außen. Wird die Vorrichtung in ihrer Dimensionierung so ausgeführt, dass bei entlastetem Hubbalg 7 vorzugsweise ca. 3 cm Abstand zwischen unterer Druckplatte 8 und Luftbalg C entstehen, so wirkt dieser Abstand als Stabilisator gegen zu weites Neigen.

Vorteilhafterweise wirkt die erfindungsgemäße Vorrichtung ebenfalls als lagedefinierende Notlaufsicherung für ein Rad im Falle eines Reifenschadens. Tritt ein Druckverlust im Reifen auf, so senkt sich die entsprechende Fahrzeugachse A auf der Seite des Reifenschadens ab, kommt jedoch auf der unteren Aufnahmeplatte 3 zu liegen und sichert die Fahrzeugachse A in dieser Höhe.
Damit wird verhindert, dass ein größerer Schaden am Fahrzeug entsteht und der Fahrer kann ohne eigenes Dazutun den nächsten Parkplatz erreichen.

Ein weiterer Vorteil der erfindungsgemäßen Vorrichtung besteht darin, dass sie auf Grund des konstruktiv realisierten kurzen Hebels die Achse B nicht nur in leerem Zustand, sondern auch im beladenen Zustand anzuheben ist. Somit wird es möglich, das Fahrzeug auch bei einem Achs-, Brems- oder Reifenschaden aus eigener Kraft bis zur Werkstatt weitergefahren werden kann.

Die erfindungsgemäße Lösung erlaubt es darüber hinaus, dass mit einer einseitig angeordneten Vorrichtung die gesamte Achse angehoben werden kann. Allerdings ist bei Nutzung der Vorrichtung zur Achsanhebung in beladenem Zustand empfohlen, die erfindungsgemäße Vorrichtung an jedem Rad der jeweiligen Achse zu montieren.

In einer weiteren besonderen Ausgestaltung der erfindungsgemäßen Lösung kann selbige mit einem Druckschalter als Auslöser für eine Anzeige im Fahrerhaus ausgestattet werden, mit welcher Reifenschäden anzuzeigen sind.

Um eine weitere Strecke mit solch einem beschädigten Reifen zurücklegen zu können, besteht die Möglichkeit zwischen untere Aufnahmeplatte 3 und Unterseite des Luftbalges C ein Distanzstück zwischenzulegen.

## Patentansprüche

1. Vorrichtung zum Anheben von Achsen von LKW- Anhängern, Sattelaufliegern und ähnlichen Fahrzeugen, aufweisend einen Fahrgestelllängsträger (A), Achsen (B) und einem zwischen diesen als Federelement angeordneten Luftbalg (C), wobei der Luftbalg (C) an das zentrale Pneumatiksystem des Fahrzeuges angeschlossen ist, welches den Luftdruck im Luftbalg (C) steuert, bestehend aus einem Träger (1), einer an seinem Ende angeordneten oberen Aufhängung (2) sowie einer an seinem unteren Ende angeordneten unteren Aufnahmeplatte (3), welche parallel zu der Längsachse des Trägers (1) angeordnet ist und in Fahrtrichtung hinter dem Rad der jeweils anzuhebenden Achse (B) angeordnet ist, wobei die erfindungsgemäße Vorrichtung hinter dem Luftbalg (C) des Rades mit der oberen Aufhängung (2) an dem Fahrgestelllängsträger (A) bzw. dem Federbock (D) lösbar oder nichtlösbar so angeordnet ist, dass der Träger (1) so weit an den Luftbalg (C) des jeweiligen Rades herangeführt wird, dass die untere Aufnahmeplatte (3), welche so ausgeführt ist, dass sie mit ihrem der Achse (B) zugewandten Ende unter den den Luftbalg (C) tragenden Bereich der Feder (D) der Achse (B) des jeweiligen Rades greift und durch eine geeignete technische Lösung am Längsträger (A) fixiert ist, wobei das andere Ende der unteren Aufnahmeplatte (3) ebenfalls aus dem Träger (1) heraus ragt und als Tragarm (8) ausgeführt ist und so im Träger (1) fixiert ist, dass im Bereich des Trägers (1) ein Drehpunkt (10) gebildet ist, um welchen sich die untere Aufnahmeplatte (3) horizontal schwenken lässt und auf diesem unteren Tragarm (8), dem der Achse (B) abgewandten Ende des Trägers (1), ein an das zentrale Pneumatiksystem des Fahrzeuges angeschlossener Hubbalg (7) angeordnet ist, welcher sich mit seinem oberen Ende mittels eines oberen Tragarms (9) abstützt und mit dem pneumatischen Drucksystem des Fahrzeuges verbunden ist, wobei sich dieser obere Tragarm (9) dabei am Träger (1) abstützt.

2. Vorrichtung nach Anspruch 1, **dadurch gekennzeichnet, dass** die obere Aufhängung (2) so gestaltet ist, dass sie mit einem Ende (2a) formschlüssig eine Seite des unteren Schenkels des Doppel-T-Profilen umgreift und die andere Seite mittels einer in Richtung des Profils verschiebbaren Klemmeinrichtung (2b), welche vorzugsweise ebenfalls formschlüssig die andere Seite des unteren Schenkels des Doppel-T-Profiles umgreift und lösbar in dieser Lage zu fixieren ist.

3. Vorrichtung nach Anspruch 2, **dadurch gekennzeichnet, dass** die untere Aufnahmeplatte (3) mit ihrer dem Träger (1) zugewandten Seite durch die offene Seite des U-Profils des Trägers (1) in einen in seiner Form dem Profil der unteren Aufnahmeplatte (3) entsprechenden Durchbruch zur Höhenverstellung (4) in der Rückwand des U-Profils (1a) eingesetzt ist und an der offenen Seite des U-Profils (1a) des Trägers (1) Auflagen (5) für die untere Aufnahmeplatte (3) angeordnet sind, wobei diese Auflagen (5) dabei so angeordnet sind, dass die untere Aufnahmeplatte (3), wenn die erfindungsgemäße Vorrichtung am Fahrgestelllängsträger (A) eingehangen ist, parallel zu diesem liegt.

4. Vorrichtung nach Anspruch 2, **dadurch gekennzeichnet, dass** die untere Aufnahmeplätte (3) mit ihrer dem Träger (1) zugewandten Seite durch die offene Seite des U-Profils des Trägers (1) in einen in seiner Form dem Profil der unteren Aufnahmeplatte (3) entsprechenden Durchbruch zur Höhenverstellung (4) in der Rückwand des U-Profils 1a eingesetzt ist und an der offenen Seite des U-Profils (1a) des Trägers (1) Auflagen (5) für die untere Aufnahmeplatte (3) angeordnet sind, wobei diese Auflagen (5) dabei so angeordnet sind, dass die untere Aufnahmeplatte (3), wenn die erfindungsgemäße Vorrichtung am Fahrgestelllängsträger (A) eingehangen ist, parallel zu diesem liegt.

5. Vorrichtung nach Anspruch 1 oder 3 zur Verwendung für verschiedene Fahrzeuge, **dadurch gekennzeichnet, dass** der obere Tragarm (9) in verschiedenen Positionen am Träger (1) anzuordnen ist, wobei der Träger (1) mehrere Position zum Einsetzen der unteren Aufnahmeplatte (3) mit zugehörigen Auf- und Widerlagern aufweist und sich dabei in einer Höhenverstellung (4) des Trägers (1) abstützt.

6. Vorrichtung nach Anspruch 1, ausgestattet mit einem Druckschalter als Auslöser für eine Anzeige im Fahrerhaus, mit welcher Reifenschäden anzuzeigen sind.

7. Verwendung der Vorrichtung nach einem der vorhergehenden Ansprüche als lagedefinierende Notlaufsicherung für ein Rad im Falle eines Reifenschadens, wobei bei Auftreten eines Druckverlustes in einem Reifen die sich absenkende entsprechende Fahrzeugachse (A) auf der Seite des Reifenschadens mittels der unteren Aufnahmeplatte (3) in Höhe dieser gesichert wird.
